# FASCICULE DE BREVET EUROPEEN

(11) **EP 2 549 765 B1**
(45) Date de publication et mention de la délivrance du brevet: **23.03.2016**
(21) Numéro de dépôt: 12175328.9
(22) Date de dépôt: 06.07.2012
(51) Int. Cl.: H04N 13/02

(54) **Système de prise de vues stéreoscopiques comportant des moyens de calibration des ojectifs de prise de vues**
Stereo-Bildaufnahmesystem, das mit Kalibriermitteln für die Objektive des Bildaufnahmesystems ausgestattet ist
Stereoscopic photo system comprising a means for calibrating taking lenses

(30) Priorité: 22.07.2011 FR 1102292
(43) Date de publication de la demande: 23.01.2013
(73) Titulaire: THALES S.A., 92400 Courbevoie (FR)
(72) Inventeur: Defay, Patrick, 42580 L'ETRAT (FR); Mujic, Elvir, 42170 ST JUST ST RAMBERT (FR)
(74) Mandataire: Bréda, Jean-Marc

(56) Documents cités:
- DE-A1- 4 320 110
- FR-A1- 2 599 579
- US-A- 4 418 993
- US-A1- 2011 069 151
- RODIN V ET AL: "STEREOVISION AXIALE: MODELISATION ET CALIBRAGE DU SYSTEME DE PRISES DE VUES, RECONSTRUCTION 3D D'OBJETS NATURELS//AXIAL STEREOVISION: MODELING AND CALIBRATION OF THE OPTICAL SYSTEM, 3D RECONSTRUCTION OF NATURAL OBJECTS", TRAITEMENT DU SIGNAL, CENTRALE DES REVUES, MONTROUGE, FR, vol. 11, no. 5, 1 janvier 1994 (1994-01-01), pages 373-391, XP009017418, ISSN: 0765-0019

## Description

Le domaine de l'invention est celui des systèmes de prise de vue dits « 3D » ou stéréoscopiques. Plusieurs caméras et objectifs sont nécessaires à la prise de vue d'images suivant plusieurs angles de vue différents. Le rendu stéréoscopique peut s'appuyer sur deux images, une gauche et une droite ou sur un ensemble de plusieurs images dont une paire uniquement est visible par le spectateur en fonction de sa position devant le dispositif de projection. Ce dernier système permet la diffusion d'images 3D dites « multivues ». Le spectateur se déplaçant devant l'image projetée 3D voit les objets représentés se déplacer comme ils le feraient dans la réalité.

La vision « 3D » correspond à une interprétation par le cerveau d'images perçues par les deux yeux afin de donner une position aux objets dans l'espace. La position attribuée dépend des différences entre les images perçues par les deux yeux du spectateur. Si l'objet est en mouvement, les images doivent être synchrones, prises au même instant, afin que le déplacement de l'objet entre deux images gauche et droite prises successivement ne soit pas interprété comme une information de distance.

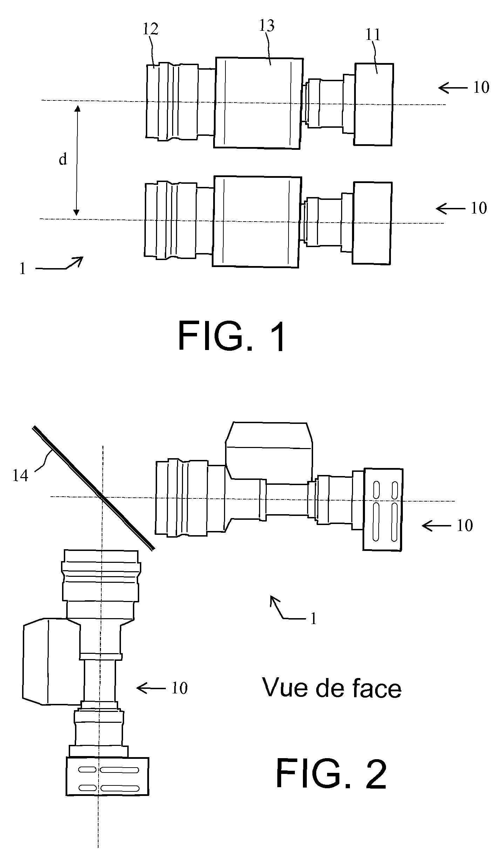

Les figures 1, 2 et 3 représentent des systèmes 1 de prise de vues 3D. Les systèmes représentés comportent deux caméras. Les pièces mécaniques qui supportent les caméras et leurs platines de réglage ne sont pas représentées sur ces figures. Chaque caméra 10 comporte trois sous-ensembles principaux qui sont :
- Un boîtier capteur 11 comportant un capteur photosensible et les moyens électroniques de commande associés ;
- Un objectif optique 12 qui est généralement un zoom. Sur ce type d'optique, trois paramètres au moins sont réglables, la focale, la mise au point et l'ouverture ;
- Un dispositif électromécanique 13 permettant de commander les moyens de réglage des différents paramètres.

La figure 1 représente un premier mode de réalisation du système de prise de vues. Dans ce premier mode, les caméras 10 sont simplement placées côte à côte, les axes optiques des objectifs 12 étant dans un même plan. Les deux axes optiques ne sont pas nécessairement parallèles.

L'inconvénient du système de la figure 1 est que la distance d séparant les deux axes optiques des objectifs a nécessairement une valeur minimale liée à l'encombrement des optiques et de leurs supports. On limite ainsi, dans certaines configurations de prise de vue, l'effet stéréoscopique.

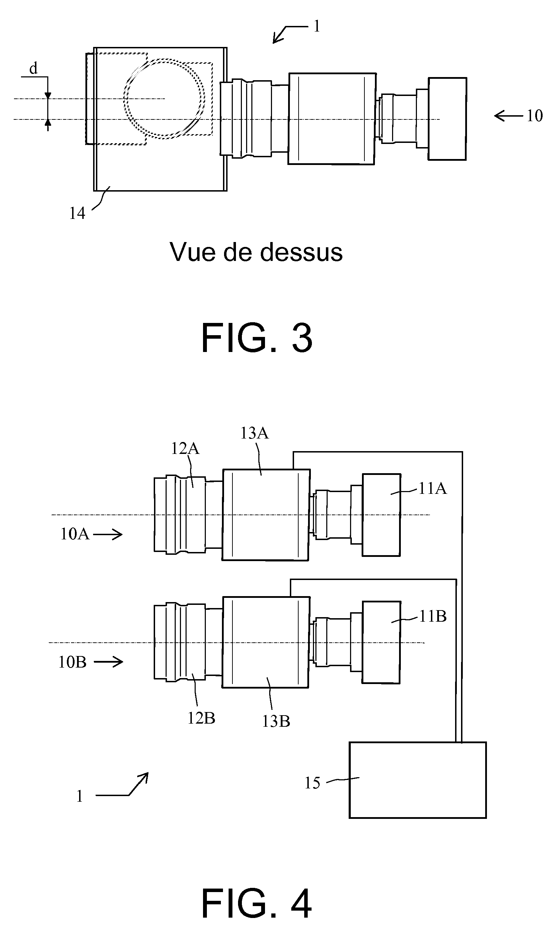

Le système représenté sur les figures 2 et 3 n'a pas cet inconvénient. Il comporte deux caméras disposées perpendiculairement l'une par rapport à l'autre et séparées par une lame semi-réfléchissante 14 disposée à 45 degrés des axes des objectifs 12. La figure 3 représente une vue de face de ce système et la figure 3 une vue de dessus. Dans cette configuration, la contrainte mécanique disparaît et il est possible, comme on le voit sur la figure 3 de séparer les axes optiques de la distance d souhaitée au prix cependant d'une atténuation photométrique et d'une légère différence de trajet optique sur l'une des voies dues à la lame semi-réfléchissante.

Si les ensembles caméra/objectif n'ont pas les mêmes caractéristiques comme le champ cadré ou couvert, le « grossissement », l'alignement des voies, la mise au point,..., le cerveau ne peut plus comparer les deux images qui sont trop disparates.

Lors d'un tournage de film ou d'une photographie 3D, le cadreur doit choisir un plan de mise au point, ce plan peut également se déplacer lors de la prise de vue afin de suivre les mouvements de la scène. Le cadreur doit donc modifier la distance de mise au point de l'ensemble des objectifs utilisés. Afin de conserver une cohérence entre les images prises des différentes caméras, cette modification doit être réalisée au même instant sur tous les objectifs qui doivent donc être synchronisés temporellement et fonctionnellement et pilotés par une seule commande.

Lorsque le cadreur modifie l'unique commande de la position de mise au point du système, tous les objectifs focalisent à la même distance de mise au point. Lorsqu'il s'arrête sur une distance de mise au point, tous les objectifs s'arrêtent à la même distance de mise au point en même temps. Ce comportement doit être identique pour le champ cadré, la mise au point et l'ouverture du diaphragme des objectifs qui peut être fonction des écarts de sensibilité des caméras. Or, les caractéristiques statiques et dynamiques des objectifs et des caméras sont différentes d'une caméra à l'autre ou d'un objectif à l'autre.

Pour résoudre ce problème, dans les techniques connues de l'art antérieur, on réalise des objectifs avec une précision telle que ces objectifs sont pratiquement identiques tant dans leur combinaison optique que dans leur mécanique de déplacement nécessaire à la mise au point et aux fonctions de zoom. On s'appuie sur la précision et la « répétabilité » de réalisation des composants mécaniques et/ou optiques constituant le système. On utilise également le tri des objectifs de façon à repérer et associer des objectifs ayant un comportement similaire, souvent issus d'un même lot de fabrication.

Les défauts de cette solution sont :
- Difficultés pour obtenir tous les composants critiques issus d'un même lot, particulièrement dans un environnement industriel ;
- Bien qu'issus d'un même lot, les objectifs intégrés et réglés par des opérateurs ne peuvent avoir un comportement parfaitement identique ;
- Les objectifs sont optimisés au départ de la chaine de production, mais leur comportement évolue avec l'usure des composants mécaniques. Leurs comportements finissent par diverger sans possibilité de correction ;
- Toutes les configurations possibles ne peuvent être couvertes par le fabricant : toutes les focales, toutes les mises au point, toutes les caméras avec leur défauts intrinsèques, toutes les températures de fonctionnement, toutes les positions de fonctionnement des objectifs,....

Une autre solution de l'art antérieur consiste à calibrer un objectif esclave sur un autre objectif considéré comme maitre. Cette procédure étant complexe, elle est réalisée en usine par le fabricant d'objectifs ou du système de prise de vue. Les défauts principaux de cette solution sont :
- Les objectifs sont appareillés en usine, ce qui crée des difficultés pour le service après-vente. Il faut nécessairement parfaitement identifier l'objectif-maitre et le ou les objectifs-esclaves ;
- Toutes les configurations possibles ne peuvent être couvertes par le fabricant : toutes les focales, toutes les mises au point, toutes les caméras avec leur défauts intrinsèques, toutes les températures de fonctionnement, toutes les positions de fonctionnement des objectifs, ... ;

- Comme précédemment, les objectifs sont optimisés au départ de la chaine de production, mais leur comportement évolue avec l'usure des composants mécaniques. Leurs comportements finissent par diverger sans possibilité de correction ;
- En fonction du type d'utilisation, par exemple, quand les objectifs sont situés de part et d'autre d'un miroir semi-réfléchissant, les objectifs nécessitent une synchronisation différente.

Le système selon l'invention ne présente pas ces inconvénients. Il comporte des moyens de calibration permettant de calibrer le système en situation réelle, dans les conditions de la prise de vues et dans un temps pouvant immédiatement précéder la prise de vues, évitant ainsi toute dérive ultérieure durant la prise de vue.

Plus précisément, l'invention a pour objet un système de prise de vues stéréoscopique comportant au moins une première caméra et une seconde caméra,
la première caméra comportant un premier objectif, ledit premier objectif comprenant des premiers moyens de réglage d'au moins un paramètre optique et un premier dispositif électromécanique permettant de commander lesdits premiers moyens de réglage,
la seconde caméra comportant un second objectif, ledit second objectif comprenant des seconds moyens de réglage du même paramètre optique et un second dispositif électromécanique permettant de commander lesdits seconds moyens de réglage,
caractérisé en ce que chaque dispositif électromécanique comporte deux modes de fonctionnement :
u n mode « mémorisation » dans lequel des moyens de mémorisation enregistrent des consignes de réglage des premiers moyens de réglage, chaque consigne correspondant à une valeur prédéterminée d'un paramètre optique, ladite valeur commune aux deux caméras ;
u n mode « prise de vues » dans lequel, la valeur d'un paramètre optique étant sélectionnée, chaque consigne de réglage correspondant à la valeur dudit paramètre optique est appliquée sur le moyen de réglage correspondant par le dispositif électromécanique correspondant.

Avantageusement, le paramètre optique est la mise au point et/ou la focale de l'objectif.

Avantageusement, les moyens de mémorisation comportent plusieurs valeurs de consigne pour un même paramètre. Les moyens de mémorisation comportent des moyens agencés de façon à calculer des valeurs de consigne intermédiaires à partir des valeurs de consigne mémorisées, permettant ainsi d'asservir un paramètre optique de façon continue sur toute sa plage de variation.

Avantageusement, les caméras sont montées soit côte à côte, les axes optiques des objectifs étant dans un même plan, soit sont disposées de part et d'autre d'une lame plane mince semi-réfléchissante.

L'invention sera mieux comprise et d'autres avantages apparaîtront à la lecture de la description qui va suivre donnée à titre non limitatif et grâce aux figures annexées parmi lesquelles :
La figure 1 déjà commentée représente un premier mode de réalisation d'un système stéréoscopique à deux caméras ;
Les figures 2 et 3 déjà commentées représentent un second mode de réalisation d'un système stéréoscopique à deux caméras ;
La figure 4 représente un système de prise de vues stéréoscopiques selon l'invention.

A titre d'exemple non limitatif, la figure 4 représente un système 1 de prise de vues stéréoscopique comportant une première caméra 10A et une seconde caméra 10B disposées en configuration côte à côte. Bien entendu, l'invention peut s'appliquer à d'autres configurations de systèmes de prises de vues comme, par exemple, une configuration à deux caméras avec miroir semi-réfléchissant telle que représentée en figures 2 et 3. On peut également l'étendre à un ensemble comportant plus de deux caméras.

Chaque caméra 10A ou 10B comporte un boîtier de photodétection 11A ou 11 B, un objectif optique 12A ou 12B et un dispositif électromécanique 13A ou 13B de commande des moyens de réglage des objectifs 12A et 12B. Généralement, les objectifs 12A et 12B sont des zooms optiques dont on peut régler la mise au point, la valeur de la focale et le diaphragme d'ouverture. La mise au point et la focale sont réglées par des déplacements internes de lentilles ou de groupes de lentilles.

Les deux caméras 10A et 10B sont sensiblement identiques et les axes optiques des objectifs 12A et 12B sont dans un même plan. Les pièces mécaniques qui supportent les caméras 10A et 10B et leurs platines de réglage ne sont pas représentées sur cette figure 4.

Le système 1 comprend de plus des moyens de pilotage 15 qui peuvent être sous la forme d'une poignée de commande.

Les dispositifs électromécaniques 13A et 13B comportent des moyens de mémorisation de valeurs de consignes des moyens de réglage du premier objectif 12A et du second objectif 12B. A chaque valeur de consigne CA du premier objectif 12A, est associée une valeur de consigne CB du second objectif 12B de façon que, lorsque les deux consignes de réglage CA et CB sont appliquées aux objectifs, une valeur d'un paramètre optique du premier objectif 12A est identique à une valeur du même paramètre optique du second objectif 12B. On citera, comme exemples de paramètre optique, la mise au point ou la valeur de la focale.

Ainsi, lorsque les moyens de commande 15 envoient la valeur d'un paramètre à appliquer aux objectifs 12A et 12B, le premier dispositif électromécanique 13A commande une consigne de réglage CA sur le premier objectif 12A, le second dispositif électromécanique 13B commande la consigne de réglage CB qui lui correspond de façon que le paramètre optique des deux objectifs 12A et 12B soit identique. En clair, les deux objectifs 12A et 12B ont alors le même grandissement, la même mise au point et la même ouverture relative.

Les moyens de commande peuvent être disposés dans une poignée de commande pour faciliter l'utilisation du système de prises de vues par l'opérateur qui va comporter deux modes de fonctionnement, un mode de calibration ou de mémorisation et un mode d'utilisation ou de prise de vues.

Le fonctionnement opérationnel du dispositif est très simple pour l'opérateur.

Dans une première étape, l'opérateur monte ses objectifs 12A et 12B sur les caméras 10A et 10B.

Dans une seconde étape, en fonction des paramètres de la prise de vues à effectuer qui sont essentiellement la distance de mise au point, la profondeur de champ souhaité, la largeur du champ, l'opérateur règle par exemple l'objectif 12A de façon à obtenir le cadrage souhaité avec une mise au point nette directement sur la scène destinée à être filmée. Cette opération se fait au moyen de la poignée de commande 15 qui pilote le dispositif électromécanique 13A. Une fois les réglages effectués, les consignes correspondant à cette configuration de l'objectif 12A qui peut comporter un ou plusieurs paramètres optiques sont mémorisées. Ces paramètres sont par exemple la mise au point et la valeur de la focale de l'objectif 12A.

Dans une troisième étape, l'opérateur règle de la même façon l'objectif 12B toujours au moyen de la poignée de commande 15 et du dispositif électromécanique 13B de façon à obtenir des paramètres optiques de l'objectif 12B identiques à ceux de l'objectif 12A. Les consignes correspondant à cette configuration sont mémorisées. Ces valeurs de consignes peuvent être différentes de celles de la caméra 10A.

Bien entendu, l'opérateur peut recommencer la seconde et la troisième étape plusieurs fois pour enregistrer plusieurs configurations appareillées des objectifs 12A et 12B correspondant, par exemple, à plusieurs focales différentes.

Au moment de la prise de vues, lorsque l'opérateur commande une configuration comportant un ou plusieurs paramètres, les bonnes consignes sont automatiquement générées de façon à obtenir des paramètres identiques sur les deux caméras au moment de l'enregistrement. Ainsi, les deux objectifs ont toujours de façon synchrone la même mise au point, la même ouverture et la même focale.

Les avantages de cette solution sont nombreux. On citera :
- La banalisation des objectifs en production. Le réglage en usine se limite à calibrer les objectifs en quelques points de la plage totale d'utilisation. L'opérateur est toujours capable de recaler deux objectifs même quand ils ne sont pas parfaitement identiques, il n'est plus nécessaire de les appareiller avant montage ;
- La simplification du service après-vente. En cas de panne d'un objectif, il suffit de recaler le nouvel objectif utilisé sans prendre de précautions particulières sur ses caractéristiques ;
- L'absence de dégradations des performances dues à l'usure des objectifs ou à des conditions thermiques différentes. Le recalage périodique permet de corriger les défauts introduits par l'usure des composants des objectifs ou les variations thermiques ;
- L'adaptation aisée des objectifs à différents types de caméras ayant, par exemple, des positions de capteurs différentes ou à différentes configurations de montage pouvant comprendre, par exemple, des miroirs de renvoi d'épaisseur différente. Les objectifs étant calibrés une fois le système monté, leur comportement tant en mise au point, qu'en champ cadré,... est parfaitement identique et compense tous les défauts introduits par les caméras, les miroirs, les filtres optiques, ...
- La simplification du recalage. Il suffit de recaler les positions réellement utilisées par l'opérateur et non pas l'objectif dans toute sa gamme d'utilisation ;
- La facilité d'utilisation. Les objectifs pouvant être calibrés en plusieurs points utiles pour la prise de vue, les opérations de zooming ou de mise au point modifiée lors de la prise de vue sont possible car, à tout instant, les objectifs sont asservis, synchrones et corrigés pour des commandes de focale ou de mise au point dans la plage calibrée. Une seule poignée focale et une seule poignée de mise au point pilotent l'ensemble des objectifs qui reçoivent donc tous les mêmes commandes en même temps.

## Revendications

1. Système de prise de vues stéréoscopique (1) comportant au moins une première caméra (10A) et une seconde caméra (10B),
la première caméra (10A) comportant un premier objectif (12A), ledit premier objectif comprenant des premiers moyens de réglage d'au moins un paramètre optique et un premier dispositif électromécanique (13A) permettant de commander lesdits premiers moyens de réglage,
la seconde caméra (10B) comportant un second objectif (12B), ledit second objectif comprenant des seconds moyens de réglage du même paramètre optique et un second dispositif électromécanique (13B) permettant de commander lesdits seconds moyens de réglage,
**caractérisé en ce que** chaque dispositif électromécanique comporte deux modes de fonctionnement :
un mode « mémorisation » dans lequel des moyens de mémorisation enregistrent des consignes de réglage des premiers moyens de réglage, chaque consigne correspondant à une valeur prédéterminée d'un paramètre optique, ladite valeur commune aux deux caméras ;
un mode « prise de vues » dans lequel, la valeur d'un paramètre optique étant sélectionné, chaque consigne de réglage correspondant à la valeur dudit paramètre optique est appliquée sur le moyen de réglage correspondant par le dispositif électromécanique correspondant.

2. Système de prise de vues stéréoscopique selon la revendication 1, **caractérisé en ce que** le paramètre optique est la mise au point et/ou la focale de l'objectif.

3. Système de prise de vues stéréoscopique selon la revendication 1, **caractérisé en ce que** les moyens de mémorisation comportent plusieurs valeurs de consigne pour un même paramètre.

4. Système de prise de vues stéréoscopique selon la revendication 3, **caractérisé en ce que** les moyens de mémorisation comportent des moyens agencés de façon à calculer des valeurs de consigne intermédiaires à partir des valeurs de consigne mémorisées, permettant ainsi d'asservir un paramètre optique de façon continue sur toute sa plage de variation.

5. Système de prise de vues stéréoscopique selon l'une des revendications précédentes, **caractérisé en ce que** les caméras (10A, 10B) sont montées côte à côte, les axes optiques des objectifs étant dans un même plan.

6. Système de prise de vues stéréoscopique selon l'une des revendications précédentes, **caractérisé en ce que** les caméras (10A, 10B) sont disposées de part et d'autre d'une lame plane mince semi-réfléchissante.

## Patentansprüche

1. Stereoskopisches Bildaufnahmesystem (1), das wenigstens eine erste Kamera (10A) und eine zweite Kamera (10B) umfasst,
wobei die erste Kamera (10A) eine erste Linse (12A) umfasst, wobei die erste Linse erste Mittel zum Regeln wenigstens eines optischen Parameters und eine erste elektromechanische Vorrichtung (13A) umfasst, mit der das erste Justiermittel gesteuert werden kann,
wobei die zweite Kamera (10B) eine zweite Linse (12B) umfasst, wobei die zweite Linse zweite Mittel zum Regeln desselben optischen Parameters und eine zweite elektromechanische Vorrichtung (13B) umfasst, mit der das zweite Justiermittel gesteuert werden kann,
**dadurch gekennzeichnet, dass** jede elektromechanische Vorrichtung zwei Betriebsmodi hat:
einen "Speicher"-Modus, in dem Regelsollwerte des ersten Regelmittels in dem Speichermittel aufgezeichnet werden, wobei jeder Sollwert einem vorbestimmten Wert eines optischen Parameters entspricht, wobei der Wert beiden Kameras gemeinsam ist;
einen "Bildaufnahme"-Modus, in dem, wenn der Wert eines optischen Parameters gewählt ist, jeder Regelsollwert, der dem Wert des optischen Parameters entspricht, durch die entsprechende elektromechanische Vorrichtung auf das entsprechende Regelmittel angewandt wird.

2. Stereoskopisches Bildaufnahmesystem nach Anspruch 1, **dadurch gekennzeichnet, dass** der optische Parameter der Fokussier- und/oder der Brennpunkt der Linse ist.

3. Stereoskopisches Bildaufnahmesystem nach Anspruch 1, **dadurch gekennzeichnet, dass** das Speichermittel mehrere Sollwerte für denselben Parameter hat.

4. Stereoskopisches Bildaufnahmesystem nach Anspruch 3, **dadurch gekennzeichnet, dass** die Speichermittel Mittel zum Berechnen von Zwischensollwerten von den gespeicherten Sollwerten umfassen, derart angeordnet, dass ein optischer Parameter über seinen gesamten Variationsbereich kontinuierlich gesteuert werden kann.

5. Stereoskopisches Bildaufnahmesystem nach einem der vorherigen Ansprüche, **dadurch gekennzeichnet, dass** die Kameras (10A, 10B) nebeneinander montiert sind, wobei die optischen Achsen der Linsen in derselben Ebene liegen.

6. Stereoskopisches Bildaufnahmesystem nach einem der vorherigen Ansprüche, **dadurch gekennzeichnet, dass** die Kameras (10A, 10B) auf beiden Seiten einer dünnen, flachen, halbreflektiven Platte angeordnet sind.

## Claims

1. A stereoscopic image capturing system (1) comprising at least one first camera (10A) and one second camera (10B),
said first camera (10A) comprising a first lens (12A), said first lens comprising first means for adjusting at least one optical parameter and a first electromechanical device (13A) for allowing said first adjustment means to be controlled,
said second camera (10B) comprising a second lens (12B), said second lens comprising second means for adjusting the same optical parameter and a second electromechanical device (13B) for allowing said second adjustment means to be controlled,
**characterised in that** each electromechanical device comprises two operating modes:
a "storage" mode, in which storage means hold adjustment set points for said first adjustment means, each set point corresponding to a predetermined value of an optical parameter, said value being common to both cameras;
an "image capturing" mode, in which, with the value of an optical parameter being selected, each adjustment set point that corresponds to the value of said optical parameter is applied to the corresponding adjustment means by the corresponding electromechanical device.

2. The stereoscopic image capturing system according to claim 1, **characterised in that** said optical parameter is the focussing and/or the focal point of said lens.

3. The stereoscopic image capturing system according to claim 1, **characterised in that** said storage means comprise a plurality of set points for the same parameter.

4. The stereoscopic image capturing system according to claim 3, **characterised in that** said storage means comprise means that are arranged so as to compute intermediate set points from said stored set points, thus allowing an optical parameter to be continuously controlled over its entire variation range.

5. The stereoscopic image capturing system according to any one of the preceding claims, **characterised in that** said cameras (10A, 10B) are mounted side-by-side, with the optical axes of said lenses being in the same plane.

6. The stereoscopic image capturing system according to any one of the preceding claims, **characterised in that** said cameras (10A, 10B) are disposed on either side of a thin, flat semi-reflective plate.
